# EUROPÄISCHE PATENTSCHRIFT

(11) **EP 3 571 437 B1**
(45) Veröffentlichungstag und Bekanntmachung des Hinweises auf die Patenterteilung: **09.03.2022**
(21) Anmeldenummer: 18700703.4
(22) Anmeldetag: 08.01.2018
(51) Int. Cl.: F21S 43/241, F21S 43/249, F21S 43/14, F21S 41/24, F21S 41/143, F21V 8/00

(54) **LEUCHTVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 20.01.2017 AT 500362017
(43) Veröffentlichungstag der Anmeldung: 27.11.2019
(73) Patentinhaber: ZKW Group GmbH, 3250 Wieselburg (AT)
(72) Erfinder: PLANK, Josef, 3251 Purgstall/Erlauf (AT); TAUDT, Lukas, 3250 Wieselburg (AT); WINTERER, Nina, 3033 Altlengbach (AT)
(74) Vertreter: Patentanwaltskanzlei Matschnig & Forsthuber OG
(86) Internationale Anmeldenummer: PCT/AT2018/060006
(87) Internationale Veröffentlichungsnummer: WO 2018/132852

(56) Entgegenhaltungen:
- EP-A2- 2 587 125
- EP-A2- 2 846 077
- EP-B1- 2 159 481
- WO-A1-2013/020155
- WO-A1-2014/019912
- DE-U1-202007 001 829

## Beschreibung

Die Erfindung betrifft eine Leuchtvorrichtung für einen Kraftfahrzeugscheinwerfer, umfassend eine Mehrzahl von Lichtquellen, eine Lichtführungseinheit aus einem lichtleitenden Vollkörper, die eine Mehrzahl von Lichtführungen aufweist, und eine nachgeschalteten Projektionslinse mit einer Brennebene, wobei jede Lichtführung eine Lichteinkopplungsfläche zur Einkopplung von Licht einer Lichtquelle in die Lichtführung aufweist, wobei die Lichtführungen hin zu einer gemeinsamen Lichtauskopplungsfläche der Lichtführungseinheit zusammengeführt sind, wobei die Lichtauskopplungsfläche zur Abstrahlung von Licht in die Projektionslinse eingerichtet ist und im Wesentlichen in der Brennebene der Projektionslinse liegt.

Des Weiteren betrifft die Erfindung einen Fahrzeugscheinwerfer mit einer erfindungsgemäßen Leuchtvorrichtung sowie einen Kraftfahrzeug mit einer erfindungsgemäßen Leuchtvorrichtung und/oder einem erfindungsgemäßen Fahrzeugscheinwerfer.

Leuchtvorrichtungen der eingangs genannten Art sind aus dem Dokument AT 513 341 A1 bekannt geworden. Darin ist in den Abbildungen 5 bis 8 der AT 513 341 A1 eine Lichtführungseinheit dargestellt, die dazu eingerichtet ist, Lichtinhomogenitäten im Bereich der Hell-Dunkel-Grenze zwischen Abblendlicht und Fernlichtverteilung auszugleichen, wobei sich zu diesem Zweck die einzelnen Lichtführungen entlang unterschiedlicher Erstreckungen kontaktieren, sodass sich das durch einzelne Lichtführungen abstrahlbare Licht in einem definierten Abstand vor der Brennebene einer nachgelagerten Projektionslinse vermengen kann. Ebenso offenbaren die EP 2 587 125 A2 und die EP 2 159 481 B1 eine Leuchtvorrichtung des Stands der Technik.

Stetig steigende Anforderungen an die Abmessungen der Lichtmodule, insbesondere der Wunsch nach immer kompakter werdenden Leuchtvorrichtungen, haben dazu geführt, dass die Bauhöhe der Projektionslinse durch sogenannten Linsenbeschnitt begrenzt wird. Der Linsenbeschnitt kann dabei so weit reichen, dass das von einer vorgelagerte Lichtführungseinheit abgestrahlte Licht nicht mehr vollständig durch die Linse abgebildet werden kann und überschüssiges, in den Linsenbeschnitt auftreffendes Licht, beispielsweise innerhalb eines Fahrzeugscheinwerfers absorbiert werden muss, wodurch im Lichtbild oft Inhomogenitäten entstehen und das System ineffizienter wird. Zudem sind ergänzende oder alternative Möglichkeiten wünschenswert, diesen Inhomogenitäten im Lichtbild von Leuchtvorrichtungen entgegen zu wirken.

Eine Aufgabe der Erfindung besteht daher darin, eine Leuchtvorrichtung zu schaffen, die einen besonders kompakten Aufbau bei gleichbleibend hoher Effizienz ermöglicht. Diese Aufgabe wird mit einer Leuchtvorrichtung nach Anspruch 1 gelöst.

Unter dem Ausdruck "Mehrzahl" wird im Folgenden im Rahmen dieser Offenbarung - sofern nicht anders angegeben - eine beliebige Anzahl größer oder gleich zwei verstanden. So kann die Anzahl beispielsweise zehn, zwanzig, dreißig oder mehr betragen. Der Fachmann ist in der Lage, die Anzahl der jeweiligen Elemente entsprechend der zu dimensionierenden Leuchtvorrichtung zu wählen. Der Ausdruck "transparenter Vollkörper" bezeichnet einen Körper, der frei von Hohlräumen innerhalb des Materials des Körpers ist, und zwar dergestalt, dass die Lichtleitung innerhalb des Körpers im Inneren des Körpers erfolgt, sodass bei Austritt von Licht aus dem Vollkörper ein optischer Übergang zu dem nachfolgendem Medium erfolgt. Weiters wird unter dem Ausdruck "wobei die Lichtauskopplungsfläche zur Abstrahlung von Licht in die Projektionslinse eingerichtet ist und im Wesentlichen in der Brennebene der Projektionslinse liegt" eine Anordnung verstanden, bei der Licht aus der Lichtauskopplungsfläche hin zu der Projektionslinse abgestrahlt werden kann, wobei die Angabe "im Wesentlichen in der Brennebene" so zu verstehen ist, dass danach getrachtet wird, dass die Lichtauskopplungsfläche möglichst so ausgestaltet und angeordnet ist, dass diese innerhalb der Brennebene liegt. Die Brennebene kann in der Praxis aufgrund der Bildfeldwölbung ebenso eine Krümmung aufweisen und damit von einer ebenen Form abweichen. In diesem Fall kann die Lichtauskopplungsfläche vorteilhafterweise so ausgestaltet sein, dass sie der "gekrümmten" Brennebene folgt, wodurch Abbildungsfehler reduziert werden können.

Insbesondere kann vorgesehen sein, dass sich das Umlenkelement entlang der gesamten Breite der Lichtauskopplungsfläche erstreckt. Das Umlenkelement kann damit besonders effektiv auf die Lichtverteilung einwirken.

Zudem ist vorgesehen, dass das Umlenkelement einen dreieckförmigen Querschnitt aufweist. Dabei ist der dreieckförmige Querschnitt durch drei Schenkel begrenzt ist, wobei ein erster Schenkel des Dreiecks parallel zur optischen Achse und ein zweiter Schenkel parallel zur Lichtauskopplungsfläche verläuft. Durch die parallele Orientierung des ersten Schenkels zur optischen Achse kann vermieden werden, dass Licht, dass oberhalb des Umlenkelements bereits parallel zur optischen Achse aus der Lichtauskopplungsfläche austritt, durch das Umlenkelement in unerwünschter Weise abgelenkt wird. Unter der Angabe, wonach der zweite Schenkel parallel zur Lichtauskopplungsfläche verläuft, wird eine Orientierung verstanden, die bedeutet, dass der zweite Schenkel - selbst wenn dieser nicht von außen erkennbar ist, beispielsweise wenn das Umlenkelement einstückig mit dem Vollkörper der Lichtführungseinheit ausgebildet ist und damit der zweite Schenkel die Lichtauskopplungsfläche fortsetzt - sich zumindest "fiktiv" zwischen den Enden der verbleibenden beiden Schenkel erstreckt.

Insbesondere kann vorgesehen sein, dass der dreieckförmige Querschnitt einen dritten Schenkel aufweist, der ein Ende des ersten Schenkels mit einem Ende des zweiten Schenkels verbindet, wobei der Neigungswinkel zwischen zweiten und dem dritten Schenkel zwischen 5° und 40° beträgt. Die Umlenkung hat sich bei Einhaltung solche Neigungswinkel als besonders wirksam erwiesen. Der dritte Schenkel muss nicht gerade ausgebildet sein, sondern kann z.B. gekrümmt oder gebogen, insbesondere konvex oder konkav gekrümmt, ausgebildet sein.

Insbesondere kann es günstig sein, wenn die Lichtführungseinheit zwei oder mehr Umlenkelemente aufweist, die übereinander an der Lichtauskopplungsfläche angeordnet sind.

Außerdem hat es sich als günstig erwiesen, wenn die Projektionslinse eine optische Achse aufweist und die Lichtführungseinheit dergestalt angeordnet ist, dass die optische Achse die Lichtauskopplungsfläche schneidet, wobei sämtliche Umlenkelemente unterhalb der optischen Achse angeordnet sind. Alternativ dazu kann vorgesehen sein, dass einzelne Umlenkelemente oberhalb der optischen Achse angeordnet sind, um beispielsweise den Verlauf der Lichtverteilung im Bereich des Vorfeldes zu optimieren.

Je näher die Umlenkelemente zur optischen Achse der Projektionslinse angeordnet sind, desto weniger stark müssen aus der Lichtführungseinheit austretende Lichtstrahlen abgelenkt werden. Deshalb kann es günstig sein, wenn der Neigungswinkel zwischen zweitem und drittem Schenkel jedes Umlenkelements so gewählt ist, dass die Neigungswinkel von übereinander angeordneten Umlenkelementen mit Annäherung an die optische Achse der Projektionslinse abnehmen. Anders ausgedrückt bedeutet dies, dass ein oberhalb angeordnetes Umlenkelement einen kleineren Neigungswinkel zwischen zweitem und drittem Schenkel des Umlenkelements aufweist, als das direkt darunter angeordnete Umlenkelement, wenn die Umlenkelemente unterhalb der optischen Achse liegen. Die oberen Umlenkelemente stehen damit weniger stark über die Lichtauskopplungsfläche hinaus. Insbesondere kann vorgesehen sein, dass die Abnahme des besagten Neigungswinkels im Vergleich zu dem nächstliegenden, unterhalb des jeweiligen Umlenkelements liegenden Umlenkelement zwischen 5 und 50% beträgt.

Zudem kann vorgesehen sein, dass übereinander angeordnete Umlenkelemente aneinander angrenzen, wodurch die Umlenkelemente besonders kompakt angeordnet werden können.

Zudem kann vorgesehen sein, dass die Lichtführungen der Lichtführungseinheit in zumindest zwei, vorzugsweise drei, übereinander liegenden Zeilen angeordnet sind, wobei die unterste Zeile Licht in einen Auskopplungsabschnitt der Lichtauskopplungsfläche einkoppelt, wobei die Umlenkelemente nur innerhalb der unteren Hälfte des Auskopplungsabschnitts angeordnet sind. Diese Anordnung kann besonders günstig sein, insbesondere dann, wenn die Lichtführungen der untersten Zeile in Zusammenwirken mit dem zumindest einen Umlenkelement und Projektionslinse zur Ausbildung einer Fernlichtverteilung eingerichtet sind. Alternativ oder ergänzend dazu können Umlenkelemente auch oberhalb der optischen Achse angeordnet sein. Beispielsweise kann dadurch die Vorfeldlichtverteilung positiv beeinflusst werden.

Zur besonders kompakten Bauweise der Leuchtvorrichtung kann vorgesehen sein, dass die Projektionslinse an ihrer Ober- und Unterseite einen ihren stetigen Umfang unterbrechenden Beschnitt zur Reduktion ihrer Bauhöhe der Projektionslinse aufweist.

Insbesondere kann vorgesehen sein, dass jeder Lichteinkopplungsfläche eine Lichtquelle zugeordnet ist, wodurch beispielsweise ein Scheinwerfer geschaffen werden kann, bei dem einzelnen Lichtquellen bzw. den Lichtquellen zugeordnete Lichtbildsegmente gezielt ausgeleuchtet oder ausgeblendet werden können.

Besonders günstig kann es sein, wenn die Lichtquellen LEDs sind.

Ein weiterer der Aspekt Erfindung betrifft einen Fahrzeugscheinwerfer, insbesondere Kraftfahrzeugscheinwerfer, umfassend eine erfindungsgemäße Leuchtvorrichtung. Insbesondere kann bei solchen Fahrzeugscheinwerfer vorgesehen sein, dass die Leuchtvorrichtung dergestalt angeordnet und die Umlenkelemente dergestalt ausgebildet sind, dass sich die Umlenkelemente entlang der Lichtauskopplungsfläche im eingebauten Zustand des Fahrzeugscheinwerfers in eine horizontale Richtung erstrecken, wodurch eine gezielte und gleichmäßige Beeinflussung des Lichtbilds in eine horizontale Richtung sichergestellt werden kann.

Zudem betrifft die Erfindung ein Kraftfahrzeug mit zumindest einer erfindungsgemäßen Leuchtvorrichtung und/oder mit zumindest einem erfindungsgemäßen Fahrzeugscheinwerfer.

Die Projektionslinse ist dabei zur Abbildung von Licht in einem Bereich vor einem Kraftfahrzeug in Form zumindest einer Lichtverteilung eingerichtet.

Die Erfindung ist im Folgenden anhand beispielhafter und nicht einschränkender Ausführungsformen näher erläutert, die in den Figuren veranschaulicht sind. Darin zeigt
Figur 1 eine perspektivische Darstellung einer Leuchtvorrichtung gemäß dem Stand der Technik,
Figur 2 eine Schnittdarstellung der Leuchtvorrichtung gemäß Figur 1,
Figur 3 eine schematische Darstellung einer weiteren Ausführungsform einer Leuchtvorrichtung gemäß dem Stand der Technik
Figur 3a eine beispielhafte Lichtverteilung der Leuchtvorrichtung bei Aktivierung einer einzelnen Lichtführung/Lichtquelle gemäß Figur 3,
Figur 4 eine erste Ausführungsform einer erfindungsgemäßen Leuchtvorrichtung,
Figur 4a eine beispielhafte Lichtverteilung der Leuchtvorrichtung bei Aktivierung einer einzelnen Lichtführung/Lichtquelle gemäß Figur 4,
Figur 5 eine beispielhafte Schnittdarstellung einer zweiten Ausführungsform der erfindungsgemäßen Leuchtvorrichtung mit darin dargestellten Strahlengängen,
Figur 6 eine Schnittdarstellung einer erfindungsgemäßen Lichtführungseinheit,
Figur 6a ein Detail der Figur 6,
Figur 6b eine beispielhafte alternative Ausführungsform der Erfindung, gemäß der lichtdurchlässige Umlenkelement entgegen der Richtung der Projektionslinse als Vertiefung innerhalb der Lichtauskopplungsfläche ausgebildet ist,
Figur 7 eine perspektivische Darstellung einer Lichtführungseinheit,
Figur 8 eine weitere Leuchtvorrichtung gemäß dem Stand der Technik mit einem Linsenbeschnitt,
Figur 8a die Lichtverteilung der Leuchtvorrichtung gemäß Figur 8 bei Aktivierung einer einzelnen Lichtführung/ Lichtquelle,
Figur 9 eine dritte Ausführungsform einer erfindungsgemäßen Leuchtvorrichtung,
Figur 9a die Lichtverteilung der Leuchtvorrichtung gemäß Figur 9 bei Aktivierung einer einzelnen Lichtführung/ Lichtquelle,
Figur 10 eine weitere Leuchtvorrichtung gemäß dem Stand der Technik,
Figur 10a die Lichtverteilung der Leuchtvorrichtung gemäß Figur 10 bei Aktivierung einer einzelnen Lichtführung/ Lichtquelle,
Figur 11 eine vierte Ausführungsform einer erfindungsgemäßen Leuchtvorrichtung, und
Figur 11a die Lichtverteilung der Leuchtvorrichtung bei Aktivierung einer einzelnen Lichtführung/Lichtquelle gemäß Figur 11.

In den folgenden Figuren bezeichnen - sofern nicht anders angegeben - gleiche Bezugszeichen gleiche Merkmale.

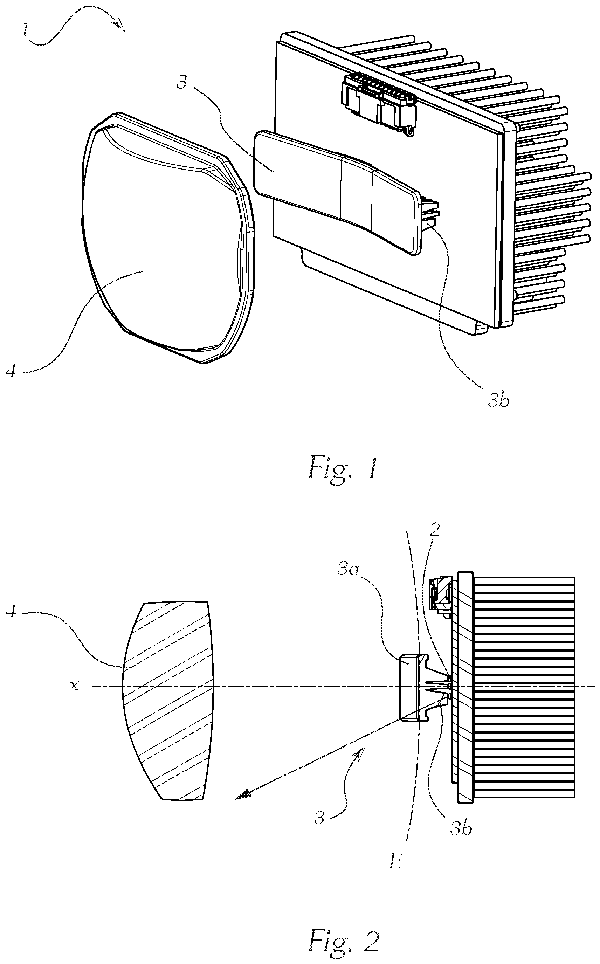

Figur 1 zeigt eine perspektivische Darstellung eine Leuchtvorrichtung 1 gemäß dem Stand der Technik. Die Leuchtvorrichtung 1 umfasst eine Mehrzahl von Lichtquellen 2, die in Figur 2 dargestellt sind, die eine Schnittdarstellung der Leuchtvorrichtung 1 gemäß Figur 1 zeigt. Zudem umfasst die Leuchtvorrichtung 1 Lichtführungseinheit 3 aus einem lichtleitenden Vollkörper, die eine Mehrzahl von Lichtführungen 3b aufweist. Eine solche Lichtführungseinheit 3 ist beispielsweise aus der AT 513 341 A1 bekannt geworden. Die Leuchtvorrichtung 1 umfasst zudem eine Projektionslinse 4, die eine optische Achse X aufweist, wobei die Lichtführungen 3b hin zu einer gemeinsamen Lichtauskopplungsfläche 3a der Lichtführungseinheit 3 zusammengeführt sind. Die Lichtauskoppelfläche 3a ist zur Abstrahlung von Licht in die Projektionslinse 4 eingerichtet und liegt im Wesentlichen in der Brennebene der Projektionslinse 4.

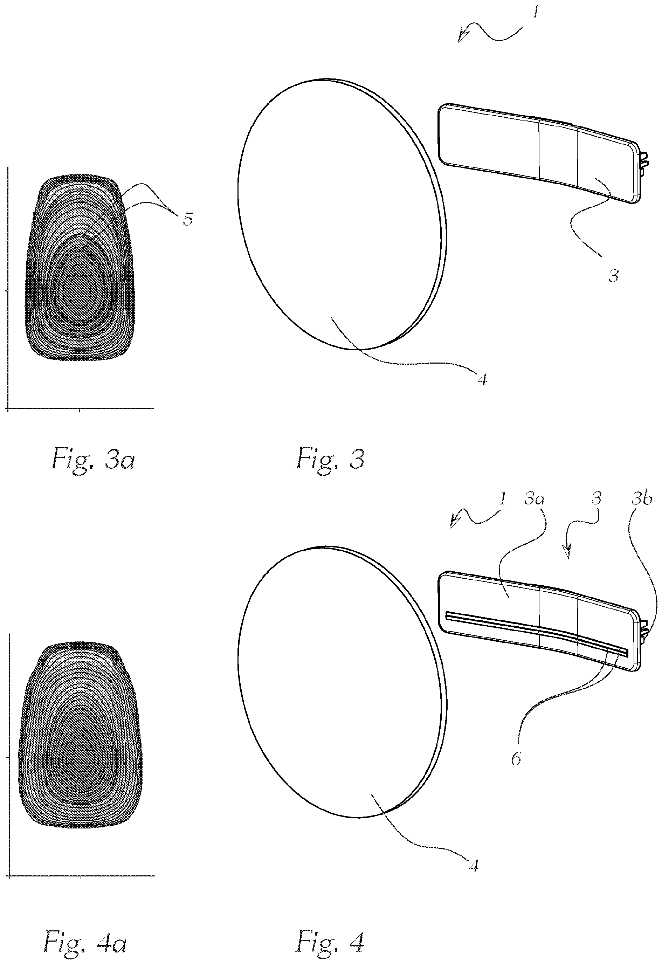

Figur 3 zeigt eine schematische Darstellung einer weiteren Ausführungsform einer Leuchtvorrichtung gemäß dem Stand der Technik. Darin ist eine Lichtführungseinheit 3 sowie eine Projektionslinse 4 erkennbar, wobei die Lichtführungseinheit 3 im Gegensatz zur Erfindung keine Umlenkelemente aufweist. Figur 3a zeigt eine beispielhafte Lichtverteilung bei Aktivierung einer einzelnen Lichtführung 3b /Lichtquelle 2 der Leuchtvorrichtung 1 gemäß Figur 3, die durch Isolinien, die Bereiche mit gleicher Leuchtintensität darstellen, verdeutlicht ist. Darin ist erkennbar, dass es in den mit dem Bezugszeichen 5 versehenen Bereichen zu starken Gradienten im Lichtbild bzw. der Lichtverteilung der Leuchtvorrichtung 1 kommt, entsprechend dem knappen Zusammenliegen der Isolinien. Diese starken Lichtintensitätsgradienten führen zu nachteiligen Inhomogenitäten in der Lichtverteilung.

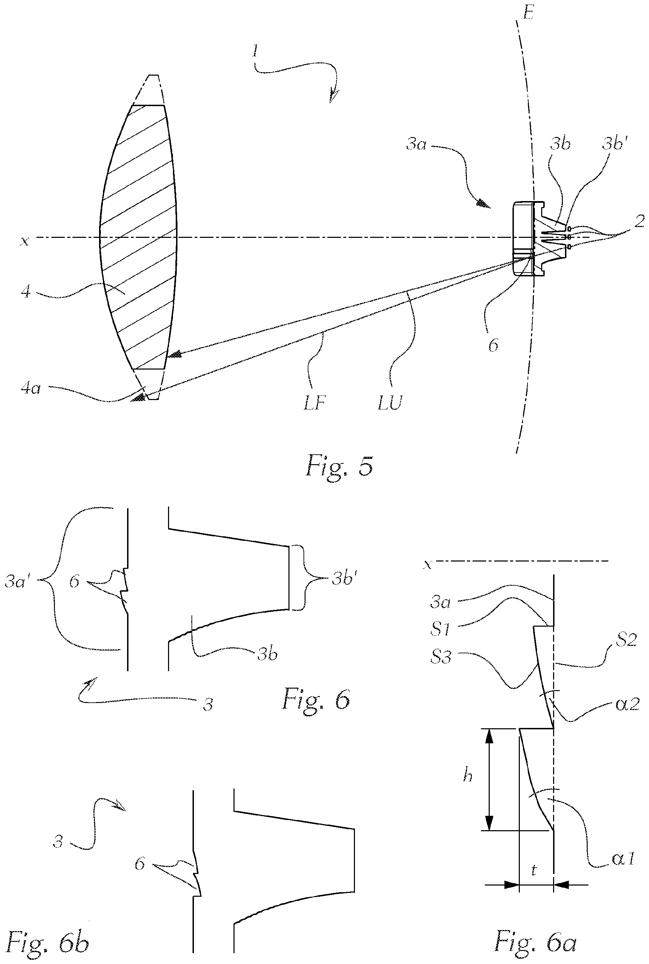

Figur 4 zeigt eine erste Ausführung einer erfindungsgemäßen Leuchtvorrichtung 1, wobei die Lichtquellen 2 in der vorliegenden Perspektive nicht dargestellt sind. Die erfindungsgemäße Leuchtvorrichtung 1 umfasst eine Mehrzahl von Lichtquellen 2, eine Lichtführungseinheit 3, die aus einem lichtleitendem Vollkörper besteht, der eine Mehrzahl von Lichtführungen 3b aufweist und eine nachgeschaltete Projektionslinse 4 mit einer Brennebene E und einer optischen Achse X, die beispielsweise in Figur 5 dargestellt ist. Die Lichtführungseinheit 3 weist eine Lichtauskoppelfläche 3a auf, hin zu der sich die Lichtführungen 3b erstrecken, wobei die Lichtauskopplungsfläche 3a zur Abstrahlung von Licht in die Projektionslinse 4 eingerichtet ist und im Wesentlichen in der Brennebene E der Projektionslinse 4 liegt. In der ersten Ausführungsform der Erfindung, die in Figur 4 dargestellt ist, weist die Lichtführungseinheit 3 zwei Umlenkelemente 6 auf, die sich entlang der Lichtauskopplungsfläche 3a rippenförmig erstrecken und über die Lichtauskoppelfläche 3a in Richtung der Projektionslinse 4 vorstehen. Beide Umlenkelemente 6 sind lichtdurchlässig und dazu eingerichtet, aus der Lichtauskopplungsfläche 3a in das Umlenkelement 6 eintretendes Licht zumindest teilweise in Richtung der Projektionslinse 4 umzulenken. Die Umlenkelemente 6 erstrecken sich dabei in horizontaler Richtung entlang der Lichtauskoppelfläche 3a. Figur 5 zeigt eine Schnittdarstellung einer Leuchtvorrichtung 1 gemäß Figur 4. Darin ist der Strahlengang einer unteren Lichtführung 3b beispielhaft dargestellt, wobei darin erkennbar ist, wie durch ein Umlenkelement 6 austretendes Licht, das durch die beispielhaften Lichtstrahlen LU dargestellt ist, in Richtung der optischen Achse X der Projektionslinse abgelenkt wird. Die Ablenkung wird insbesondere durch einen Vergleich mit den fiktiven Lichtstrahlen LF erkennbar, die den Verlauf der Lichtstrahlen für den Fall darstellen, bei welchem kein Umlenkelement 6 vorgesehen wäre. Außerdem ist in Figur 5 erkennbar, dass die Lichtführungen 3b jeweils eine Lichteinkopplungsfläche 3b' aufweisen, über die die Lichtquellen 2 Licht in die Lichtführungseinheit 3 einkoppeln können.

In Figur 5 ist deutlich erkennbar, dass die fiktiven Lichtstrahlen LF auf einen Außenbereich 4a der Projektionslinse 4 auftreffen würden, der bei kompakten Projektionslinsen beispielsweise durch Beschnitt entfernt wird. In diesem Fall würden die Lichtstrahlen LF nicht mehr zur Bildung einer Lichtverteilung beitragen, wodurch sich die Effizienz der Leuchtvorrichtung 1 verringern würde. Das Vorsehen der Umlenkelemente 6 ermöglicht es hingegen, diese Lichtstrahlen in Richtung der optischen Achse abzulenken, wie durch die beispielhaften Lichtstrahlen LU dargestellt ist, wodurch sich die Effizienz der Leuchtvorrichtung trotz seiner kompakten Bauweise unverändert hoch aufrecht erhalten lässt.

Figur 6 zeigt eine Schnittdarstellung einer beispielhaften Lichtführungseinheit 3, wie sie beispielsweise in der ersten Ausführungsform der Erfindung vorgesehen sein kann. Figur 6a zeigt eine Detaildarstellung der Figur 6, in der die Umlenkelemente 6 besonders deutlich dargestellt sind. Darin ist erkennbar, dass die Umlenkelemente 6 einen dreieckförmigen Querschnitt aufweisen, der durch drei Schenkel begrenzt ist, wobei ein erster Schenkel S1 des Dreiecks parallel zur optischen Achse X und ein zweiter Schenkel S2 parallel zur Lichtauskoppelflächen 3a verläuft. Der dritte Schenkel S3 verbindet die Enden des ersten und zweiten Schenkels S1 bzw. S2 zu einem Dreieck, wobei zwischen zweiten und dritten Schenkel ein Neigungswinkel α eingeschossen ist, der die Neigung des dritten Schenkels S3 in Bezug zu dem zweiten Schenkel S2 bezeichnet. Dieser Neigungswinkel beträgt typischerweise zwischen 5° und 40°, wobei gilt: Je größer der Neigungswinkel gewählt wird, desto weiter steht ein Umlenkelement über die Lichtauskopplungsfläche 3a hervor. Der dritte Schenkel S3 muss nicht zwingend gerade ausgebildet sein. Ein Umlenkelement 6 weist typischerweise eine Höhe h von 0,5 bis 2 mm auf, wobei die Tiefe t des Umlenkelements 6 beispielsweise zwischen 0,1 und 0,5 mm betragen kann. Im vorliegenden Beispiel grenzen zwei übereinander angeordnete Umlenkelemente unmittelbar aneinander an, wodurch vermieden werden kann, das Licht nicht abgelenkt zwischen den Umlenkelementen 6 aus der Lichtauskopplungsfläche 3a austritt. Die Neigungswinkel α von übereinander angeordneten Umlenkelementen 6 müssen nicht zwangsläufig gleich sein, sondern können voneinander abweichen. So hat es sich günstig erwiesen, dass die Neigungswinkel α von übereinander angeordneten Umlenkelementen 6 mit zunehmender Annäherung an die optische Achse X abnehmen. So kann z.B. der Neigungswinkel α₁ des unteren Umlenkelements 6 größer sein als der Neigungswinkel α₂ des direkt oberhalb angeordneten Umlenkelemente 6 usw.

Figur 6b zeigt eine beispielhafte alternative Ausführungsform der Erfindung, bei der die lichtdurchlässigen Umlenkelemente 6 entgegen der Richtung der Projektionslinse 4 als Vertiefung innerhalb der Lichtauskopplungsfläche 3a ausgebildet sind. Die Umlenkelemente 6 können daher beispielsweise als Ausnehmung innerhalb der Lichtauskopplungsfläche 3a ausgebildet sein, wobei die Ausnehmung prinzipiell die gleiche geometrische Form aufweisen kann, wie ein in Richtung der Projektionslinse 4 von der Lichtauskopplungsfläche 3a abstehendes Umlenkelement 6.

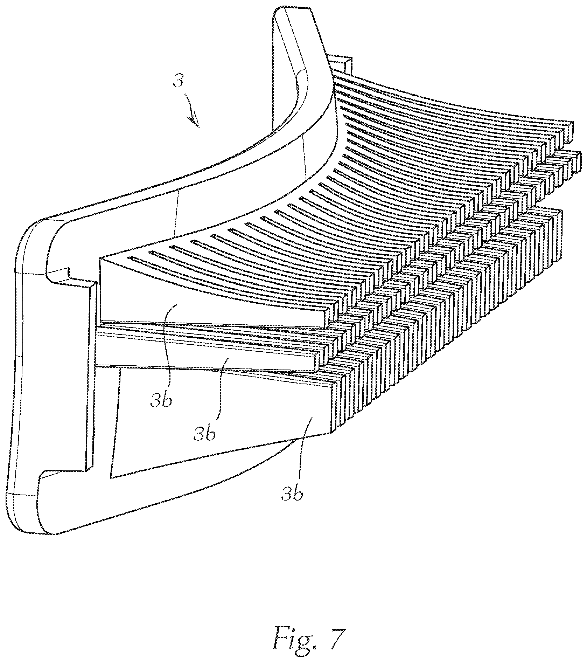

Figur 7 zeigt eine perspektivische Darstellung einer Lichtführungseinheit 3 gemäß der vorliegenden Erfindung, wobei darin die Lichtführungen 3b deutlich erkennbar sind und die den Lichtführungen 3b zugeordneten Lichtquellen 2 zur besseren Übersicht nicht dargestellt sind. Die Lichtführungen 3b der Lichtführungseinheit 3 sind in diesem Beispiel in drei, übereinander liegenden Zeilen angeordnet, wobei die unterste Zeile Licht in einen Auskopplungsabschnitt 3a' (siehe auch Figur 6) der Lichtauskopplungsfläche 3 einkoppelt, wobei die Umlenkelemente nur innerhalb der unteren Hälfte des Auskopplungsabschnitts 3a' angeordnet sind. Die Lichtführungen 3b der untersten Zeile sind in Zusammenwirken mit den Umlenkelementen 6 und der Projektionslinse 4 zur Ausbildung einer Fernlichtverteilung eingerichtet, wobei Licht zu diesem Zweck über Lichtquellen 2 in die Lichtführungen 3b eingestrahlt wird.

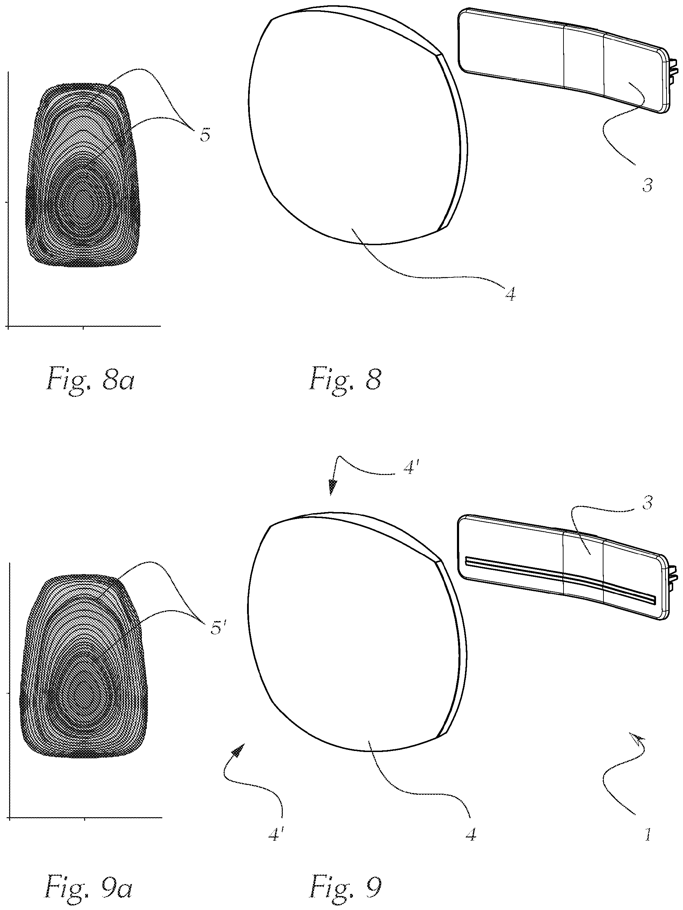

Figur 8 zeigt eine weitere Leuchtvorrichtung gemäß dem Stand der Technik, in der eine beschnittene Projektionslinse 4 dargestellt ist. Figur 8a zeigt die Lichtverteilung der Leuchtvorrichtung gemäß Figur 8, bei der inhomogene Bereiche 5 erkennbar sind.

Figur 9 zeigt eine dritte Ausführungsform einer erfindungsgemäßen Leuchtvorrichtung. Die Anordnung unterscheidet sich von jener gemäß Figur 8, indem die Lichtführungseinheit 3 die bereits genannten Umlenkelemente 6 aufweist. Figur 9a zeigt die Lichtverteilung der Leuchtvorrichtung gemäß Figur 9, in der die bisher inhomogenen Bereiche nun deutlich verbessert sind und mit dem Bezugszeichen 5' referenziert werden.

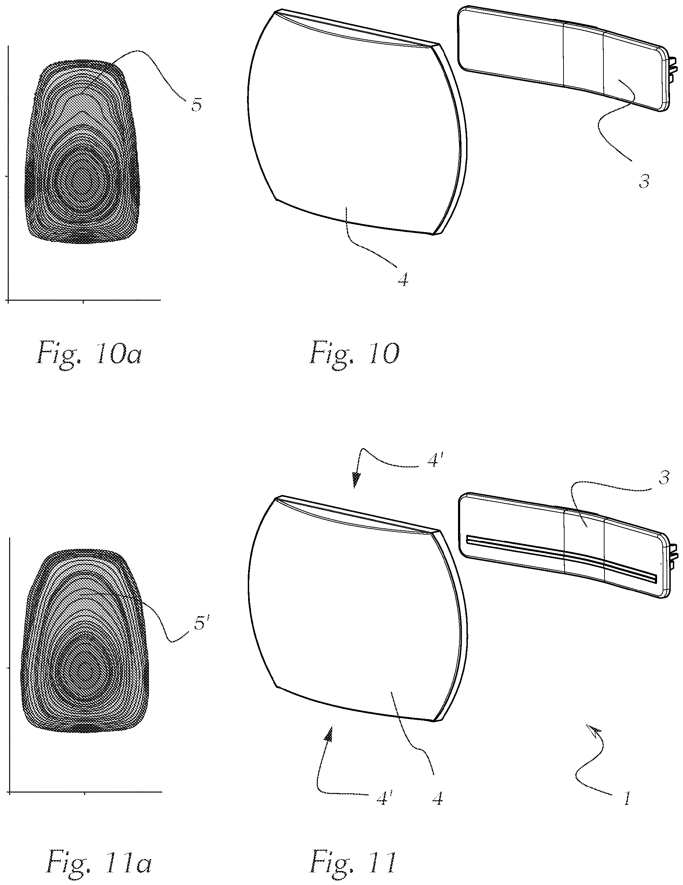

Figur 10 zeigt eine weitere Leuchtvorrichtung gemäß dem Stand der Technik, in der der Linsenbeschnitt deutlich stärker ausgebildet ist als in der Ausführungsform gemäß Figur 8. Die Linsenhöhe beträgt nun beispielsweise 53 mm anstatt von 65 mm gemäß Figur 8 oder beispielsweise 90 mm einer unbeschnittenen Linse. Figur 10a zeigt die Lichtverteilung der Leuchtvorrichtung gemäß Figur 10, wobei ein inhomogener Bereich durch das Bezugszeichen 5 hervorgehoben ist.

Figur 11 zeigt ein vierte Ausführungsform einer erfindungsgemäßen Leuchtvorrichtung 1, die ebenso einen Linsenbeschnitt der Projektionslinse 4 hin zu einer Linsenhöhe von beispielsweise 53 mm aufweist und Figur 11a die zugehörige Lichtverteilung. Darin ist klar erkennbar, dass die Inhomogenität, die im Bereich 5 der Figur 10a erkennbar war, im Bereich 5' der Fig. 11a durch die Umlenkelemente 6 ausgeglichen werden konnte. In Figur 11 ist zudem deutlich erkennbar, dass die Projektionslinse 4 an ihrer Ober- und Unterseite einen ihren stetigen Umfang unterbrechenden Beschnitt 4' zur Reduktion ihrer Bauhöhe der Projektionslinse aufweist.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigten Ausführungsformen beschränkt. Auch können einzelne Aspekte der Erfindung bzw. der Ausführungsformen aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben.

## Patentansprüche

1. Leuchtvorrichtung (1) für einen Kraftfahrzeugscheinwerfer, umfassend
- eine Mehrzahl von Lichtquellen,
- eine Lichtführungseinheit (3) aus einem lichtleitenden Vollkörper, die eine Mehrzahl von Lichtführungen (3b) aufweist, und
- eine nachgeschalteten Projektionslinse (4) mit einer Brennebene (E) und einer optischen Achse (X),
wobei jede Lichtführung (3b) eine Lichteinkopplungsfläche (3b') zur Einkopplung von Licht einer Lichtquelle (2) in die Lichtführung (3b) aufweist, wobei die Lichtführungen (3b) hin zu einer gemeinsamen Lichtauskopplungsfläche (3a) der Lichtführungseinheit (3) zusammengeführt sind, wobei die Lichtauskopplungsfläche (3a) zur Abstrahlung von Licht in die Projektionslinse (4) eingerichtet ist und im Wesentlichen in der Brennebene (E) der Projektionslinse (4) liegt, wobei die Lichtführungseinheit (3)
zumindest ein lichtdurchlässiges Umlenkelement (6) aufweist, das sich entlang der Lichtauskopplungsfläche (3a) rippenförmig erstreckt und über die Lichtauskopplungsfläche (3a) in Richtung der Projektionslinse (4) hervorsteht oder entgegen dieser Richtung als Vertiefung innerhalb Lichtauskopplungsfläche (3a) ausgebildet ist, wobei das Umlenkelement (6) dazu eingerichtet ist, aus der Lichtauskopplungsfläche (3a) in das Umlenkelement (6) eintretendes Licht zumindest teilweise in Richtung der Projektionslinse (4) umzulenken, wobei das Umlenkelement (6) einen dreieckförmigen Querschnitt aufweist, wobei der dreieckförmige Querschnitt durch drei Schenkel (S1, S2, S3) begrenzt ist, **dadurch gekennzeichnet, dass** ein erster Schenkel (S1) des Dreiecks parallel zur optischen Achse (X) und ein zweiter Schenkel (S2) parallel zur Lichtauskopplungsfläche (3a) verläuft.

2. Leuchtvorrichtung (1) nach Anspruch 1, wobei sich das Umlenkelement (6) entlang der gesamten Breite der Lichtauskopplungsfläche (3a) erstreckt.

3. Leuchtvorrichtung (1) nach Anspruch 1 oder 2, wobei der dreieckförmige Querschnitt einen dritten Schenkel (S3) aufweist, der ein Ende des ersten Schenkels (S1) mit einem Ende des zweiten Schenkels (S2) verbindet, wobei der Neigungswinkel (α,α₁,α₂) zwischen zweiten und dem dritten Schenkel (S3) zwischen 5 und 40° beträgt.

4. Leuchtvorrichtung (1) nach einem der vorhergehenden Ansprüche, wobei die Lichtführungseinheit (3) zwei oder mehr Umlenkelemente (6) aufweist, die übereinander an der Lichtauskopplungsfläche (3a) angeordnet sind.

5. Leuchtvorrichtung (1) nach Anspruch 3 und 4, wobei die Lichtführungseinheit (3) dergestalt angeordnet ist, dass die optische Achse (X) die Lichtauskopplungsfläche (3a) schneidet, wobei sämtliche Umlenkelemente (6) unterhalb der optischen Achse (X) angeordnet sind.

6. Leuchtvorrichtung (1) nach Anspruch 5, wobei der Neigungswinkel (α,α₁,α₂) zwischen zweitem und drittem Schenkel jedes Umlenkelements (6) so gewählt ist, dass die Neigungswinkel (α,α₁,α₂) von übereinander angeordneten Umlenkelementen (6) mit Annäherung an die optische Achse (X) der Projektionslinse (4) abnehmen.

7. Leuchtvorrichtung (1) nach Anspruch 6, wobei die Abnahme des Neigungswinkels (α,α₁,α₂) eines jeweiligen Umlenkelements (6) im Vergleich zu dem nächstliegenden, unterhalb des jeweiligen Umlenkelements (6) liegenden Umlenkelement (6) zwischen 5 und 50% beträgt.

8. Leuchtvorrichtung (1) nach einem der Ansprüche 4 bis 7, wobei übereinander angeordnete Umlenkelemente (6) aneinander angrenzen.

9. Leuchtvorrichtung (1) nach einem der vorhergehenden Ansprüche, wobei die Lichtführungen (3b) der Lichtführungseinheit (3) in zumindest zwei, vorzugsweise drei, übereinander liegenden Zeilen angeordnet sind, wobei die unterste Zeile Licht in einen Auskopplungsabschnitt (3a') der Lichtauskopplungsfläche (3a) einkoppelt, wobei die Umlenkelemente (6) nur innerhalb der unteren Hälfte des Auskopplungsabschnitts (3a') angeordnet sind.

10. Leuchtvorrichtung (1) nach Anspruch 9, wobei die Lichtführungen (3b) der untersten Zeile in Zusammenwirken mit dem zumindest einen Umlenkelement (6) und Projektionslinse (4) zur Ausbildung einer Fernlichtverteilung eingerichtet sind.

11. Leuchtvorrichtung (1) nach einem der vorhergehenden Ansprüche, wobei die Projektionslinse (4) an ihrer Ober- und Unterseite einen ihren stetigen Umfang unterbrechenden Beschnitt (4') zur Reduktion ihrer Bauhöhe der Projektionslinse (4) aufweist.

12. Leuchtvorrichtung (1) nach einem der vorhergehenden Ansprüche, wobei jeder Lichteinkopplungsfläche (3b') eine Lichtquelle (2) zugeordnet ist.

13. Leuchtvorrichtung (1) nach einem der vorhergehenden Ansprüche, wobei die Lichtquellen (2) LEDs sind.

14. Fahrzeugscheinwerfer, insbesondere Kraftfahrzeugscheinwerfer, umfassend eine Leuchtvorrichtung (1) nach einem der vorhergehenden Ansprüche.

15. Fahrzeugscheinwerfer nach Anspruch 14, wobei die Leuchtvorrichtung (1) dergestalt angeordnet und die Umlenkelemente (6) dergestalt ausgebildet sind, dass sich die Umlenkelemente (6) entlang der Lichtauskopplungsfläche (3a) im eingebauten Zustand des Fahrzeugscheinwerfers in eine horizontale Richtung erstrecken.

16. Kraftfahrzeug mit zumindest einer Leuchtvorrichtung (1) nach einem der Ansprüche 1 bis 13 und/oder mit zumindest einem Fahrzeugscheinwerfer nach Anspruch 14 oder 15.

## Claims

1. Lighting device (1) for a motor vehicle headlamp, comprising
- a plurality of light sources,
- a light guiding unit (3) made of a light guiding solid body having a plurality of light guides (3b), and
- a downstream projection lens (4) having a focal plane (E) and an optical axis (X),
wherein each light guide (3b) has a light coupling-in surface (3b') for coupling light from a light source (2) into the light guide (3b), the light guides (3b) being brought together toward a common light coupling-out surface (3a) of the light guide unit (3), wherein the light outcoupling surface (3a) is arranged to radiate light into the projection lens (4) and lies substantially in the focal plane (E) of the projection lens (4), wherein the light guiding unit (3) has at least one light-transmitting deflecting element (6) which extends in a rib-like manner along the light extraction surface (3a) and projects beyond the light extraction surface (3a) in the direction of the projection lens (4) or is formed in the opposite direction as a depression within the light extraction surface (3a), the deflecting element (6) being set up to deflect light entering the deflecting element (6) from the light extraction surface (3a) at least partially in the direction of the projection lens (4), wherein the deflection element (6) has a triangular cross-section, the triangular cross-section being bounded by three legs (S1, S2, S3), **characterized in that** a first leg (S1) of the triangle runs parallel to the optical axis (X) and a second leg (S2) runs parallel to the light extraction surface (3a).

2. Lighting device (1) according to claim 1, wherein the deflecting element (6) extends along the entire width of the light decoupling surface (3a).

3. Lighting device (1) according to claim 1 or 2, wherein the triangular cross-section comprises a third leg (S3) connecting one end of the first leg (S1) to one end of the second leg (S2), wherein the angle of inclination (α,α₁,α₂) between the second and the third leg (S3) is between 5 and 40°.

4. Lighting device (1) according to any one of the preceding claims, wherein the light guiding unit (3) comprises two or more deflection elements (6) arranged one above the other on the light decoupling surface (3a).

5. Lighting device (1) according to claim 3 and 4, wherein the light guiding unit (3) is arranged such that the optical axis (X) intersects the light outcoupling surface (3a), wherein all deflection elements (6) are arranged below the optical axis (X).

6. Lighting device (1) according to claim 5, wherein the angle of inclination (α,α₁,α₂) between second and third leg of each deflection element (6) is selected such that the angles of inclination (α,α₁,α₂) of deflection elements (6) arranged one above the other decrease as the optical axis (X) of the projection lens (4) is approached.

7. Lighting device (1) according to claim 6, wherein the decrease in the angle of inclination (α,α₁,α₂) of a respective deflection element (6) compared to the nearest deflection element (6) located below the respective deflection element (6) is between 5 and 50%.

8. Lighting device (1) according to any one of claims 4 to 7, wherein deflection elements (6) arranged one above the other are adjacent to one another.

9. Lighting device (1) according to one of the preceding claims, wherein the light guides (3b) of the light guide unit (3) are arranged in at least two, preferably three, superimposed rows, wherein the lowest row couples light into an outcoupling section (3a') of the light outcoupling surface (3a), wherein the deflection elements (6) are arranged only within the lower half of the outcoupling section (3a').

10. Lighting device (1) according to claim 9, wherein the light guides (3b) of the lowest row are arranged in cooperation with the at least one deflection element (6) and projection lens (4) to form a high beam distribution.

11. Lighting device (1) according to one of the preceding claims, wherein the projection lens (4) has on its upper and lower side a trim (4') interrupting its continuous circumference for reducing its overall height of the projection lens (4).

12. Lighting device (1) according to one of the preceding claims, wherein a light source (2) is associated with each light coupling surface (3b').

13. Lighting device (1) according to one of the preceding claims, wherein the light sources (2) are LEDs.

14. Vehicle headlight, in particular motor vehicle headlight, comprising a lighting device (1) according to one of the preceding claims.

15. Vehicle headlight according to claim 14, wherein the lighting device (1) is arranged in such a way and the deflection elements (6) are designed in such a way that the deflection elements (6) extend along the light extraction surface (3a) in a horizontal direction in the installed state of the vehicle headlight.

16. Motor vehicle with at least one lighting device (1) according to one of claims 1 to 13 and/or with at least one vehicle headlamp according to claim 14 or 15.

## Revendications

1. Dispositif d'éclairage (1) pour un projecteur de véhicule automobile, comprenant
- une pluralité de sources lumineuses,
- une unité de guidage de lumière (3) constituée d'un corps plein conduisant la lumière, qui présente une pluralité de guides de lumière (3b), et
- une lentille de projection (4) placée en aval, avec un plan focal (E) et un axe optique (X),
chaque guide de lumière (3b) présentant une surface de couplage de lumière (3b') pour le couplage de la lumière d'une source de lumière (2) dans le guide de lumière (3b), les guides de lumière (3b) étant réunis vers une surface de découplage de lumière commune (3a) de l'unité de guide de lumière (3), la surface de découplage de la lumière (3a) étant conçue pour émettre de la lumière dans la lentille de projection (4) et se trouvant essentiellement dans le plan focal (E) de la lentille de projection (4), l'unité de guidage de la lumière (3) présentant au moins un élément de déviation (6) transparent à la lumière, qui s'étend en forme de nervure le long de la surface de découplage de la lumière (3a) et qui fait saillie au-dessus de la surface de découplage de la lumière (3a) en direction de la lentille de projection (4) ou qui est réalisé dans le sens opposé à cette direction sous la forme d'un renfoncement à l'intérieur de la surface de découplage de la lumière (3a), l'élément de déviation (6) étant conçu pour dévier au moins partiellement en direction de la lentille de projection (4) la lumière qui pénètre dans l'élément de déviation (6) depuis la surface de découplage de la lumière (3a), l'élément de déviation (6) présentant une section transversale triangulaire, la section transversale triangulaire étant délimitée par trois branches (S1, S2, S3), **caractérisé en ce qu'**une première branche (S1) du triangle est parallèle à l'axe optique (X) et une deuxième branche (S2) est parallèle à la surface de découplage de la lumière (3a).

2. Dispositif d'éclairage (1) selon la revendication 1, dans lequel l'élément de déviation (6) s'étend sur toute la largeur de la surface de découplage de la lumière (3a).

3. Dispositif d'éclairage (1) selon la revendication 1 ou 2, dans lequel la section transversale triangulaire comporte une troisième branche (S3) reliant une extrémité de la première branche (S1) à une extrémité de la deuxième branche (S2), l'angle d'inclinaison (α,α₁,α₂) entre la deuxième et la troisième branche (S3) étant compris entre 5 et 40°.

4. Dispositif d'éclairage (1) selon l'une quelconque des revendications précédentes, dans lequel l'unité de guidage de lumière (3) comprend deux ou plusieurs éléments de déviation (6) disposés les uns au-dessus des autres sur la surface de découplage de lumière (3a).

5. Dispositif d'éclairage (1) selon les revendications 3 et 4, dans lequel l'unité de guidage de la lumière (3) est disposée de telle sorte que l'axe optique (X) coupe la surface de découplage de la lumière (3a), tous les éléments de renvoi (6) étant disposés en dessous de l'axe optique (X).

6. Dispositif d'éclairage (1) selon la revendication 5, dans lequel l'angle d'inclinaison (α,α₁,α₂) entre la deuxième et la troisième branche de chaque élément de déviation (6) est choisi de telle sorte que les angles d'inclinaison (α,α₁,α₂) des éléments de déviation (6) superposés diminuent à mesure qu'ils se rapprochent de l'axe optique (X) de la lentille de projection (4).

7. Dispositif d'éclairage (1) selon la revendication 6, dans lequel la diminution de l'angle d'inclinaison (α,α₁,α₂) d'un élément de renvoi (6) respectif par rapport à l'élément de renvoi (6) le plus proche situé en dessous de l'élément de renvoi (6) respectif est comprise entre 5 et 50%.

8. Dispositif d'éclairage (1) selon l'une quelconque des revendications 4 à 7, dans lequel des éléments de déviation (6) superposés sont adjacents les uns aux autres.

9. Dispositif d'éclairage (1) selon l'une des revendications précédentes, dans lequel les guides de lumière (3b) de l'unité de guidage de lumière (3) sont disposés en au moins deux, de préférence trois, lignes superposées, la ligne la plus basse couplant la lumière dans une section de découplage (3a') de la surface de découplage de lumière (3a), les éléments de renvoi (6) étant disposés uniquement à l'intérieur de la moitié inférieure de la section de découplage (3a').

10. Dispositif d'éclairage (1) selon la revendication 9, dans lequel les guides de lumière (3b) de la ligne la plus basse sont conçus pour former une répartition de la lumière de loin en coopération avec le ou les éléments de renvoi (6) et la lentille de projection (4).

11. Dispositif d'éclairage (1) selon l'une des revendications précédentes, dans lequel la lentille de projection (4) présente sur sa face supérieure et sa face inférieure un rognage (4') interrompant sa circonférence continue pour réduire sa hauteur de construction de la lentille de projection (4).

12. Dispositif d'éclairage (1) selon l'une quelconque des revendications précédentes, dans lequel une source de lumière (2) est associée à chaque surface de couplage de lumière (3b').

13. Dispositif d'éclairage (1) selon l'une des revendications précédentes, dans lequel les sources lumineuses (2) sont des LED.

14. Projecteur de véhicule, notamment projecteur de véhicule automobile, comprenant un dispositif lumineux (1) selon l'une des revendications précédentes.

15. Projecteur de véhicule selon la revendication 14, dans lequel le dispositif lumineux (1) est disposé et les éléments de déviation (6) sont réalisés de telle sorte que les éléments de déviation (6) s'étendent le long de la surface de découplage de lumière (3a) dans une direction horizontale lorsque le projecteur de véhicule est monté.

16. Véhicule automobile comportant au moins un dispositif lumineux (1) selon l'une des revendications 1 à 13 et/ou comportant au moins un projecteur de véhicule selon la revendication 14 ou 15.
